# EUROPEAN PATENT APPLICATION

(11) **EP 1 424 817 A2**
(43) Date of publication of application: **02.06.2004**
(21) Application number: 03257098.8
(22) Date of filing: 11.11.2003
(51) Int. Cl.: H04L 12/56

(54) **Circuit connection restoration method and program for restoring connection in short time**

(30) Priority: 29.11.2002 JP 2002347361
(71) Applicant: ALPS ELECTRIC CO., LTD., Ota-ku Tokyo 145 (JP)
(72) Inventor: Yamaguchi, Masaya, Tokyo 145 (JP); Kim, Talguk, Tokyo 145 (JP)
(74) Representative: Kensett, John Hinton

(57) **Abstract**

An information communication apparatus (1) includes a host computer (2) and a Bluetooth module (3) functioning as a communication module. A control unit (10) of the Bluetooth module detects disconnection of a radio transmission line for a radio transmission signal and analyzes the reason for the disconnection. Then, the control unit determines whether or not to reconnect the disconnected radio transmission line on the basis of the analysis of the disconnection reason. If the disconnected radio transmission line should be reconnected, the control unit generates a reconnection command signal. In contrast, if the disconnected radio transmission line does not have to be reconnected, the control unit generates a forced line disconnection command signal.

## Description

### BACKGROUND OF THE INVENTION

### 1. Field of the Invention

The present invention relates to line connection restoration methods and line connection restoration programs, and more particularly, to a line connection restoration method and a line connection restoration program for a case where a radio transmission line for radio communication between a plurality of information communication apparatuses is disconnected.

### 2. Description of the Related Art

In recent years, radio communication systems, such as Bluetooth (trademark), have been used as systems for transferring information between a plurality of information communication apparatuses, such as portable telephones, personal digital assistants (PDAs), portable personal computers, and printers.

Such information communication apparatuses comprise a host computer connected to a communication module, such as a Bluetooth module. The communication module of such an information communication apparatus converts information output from the host computer into a radio transmission signal and sends the radio transmission signal to another information communication apparatus. Also, the communication module converts a radio transmission signal received from the other information communication apparatus into a baseband signal and inputs the baseband signal to the host computer.

For example, the Bluetooth system, which is a radio communication system, uses a 2.4 GHz industrial scientific medical (ISM) band as a transmission frequency band, and has high-frequency channels of a bandwidth of 1 MHz. Also, a radio transmission signal is assigned, in accordance with a specified order, to one of the plurality of channels by frequency hopping at regular time intervals. Also, for the Bluetooth system, the electric field strength is very weak such that the effective transfer distance is assumed to be short, such as approximately 10 to 100 m.

Thus, the Bluetooth system is susceptible to other interference waves in the same transmission frequency band, and if a radio transmission signal is frequency-hopped to a frequency of the interference wave or a high-frequency channel near the frequency of the interference wave, an influence of the interference wave may prevent reception of the radio transmission signal using the high-frequency channel between the communication modules, thus causing a communication failure.

In known information communication apparatuses, if the state of the communication failure continues for a predetermined time or more, a Bluetooth module as a communication module automatically disconnects a radio transmission line, and outputs to the host computer a disconnection event representing disconnection of the line. Then, the host computer recognizes from the disconnection event the disconnection of the radio transmission line, and outputs to the Bluetooth module a line connection command for reconnection of the radio transmission line. Then, the Bluetooth module performs processing for reconnection of the radio transmission line in accordance with the line connection command. Accordingly, the information communication apparatus restores the radio transmission line that has been disconnected, so that the state of the communication failure can be resolved.

However, if the host computer in the information communication apparatus is performing processing for other information when the disconnection event is input to the host computer, the host computer first performs the processing for the other information and then outputs a line connection command to the Bluetooth module. Thus, if the disconnection event is input to the host computer when the host computer is performing other information processing, a long time is needed for the host computer to output the line connection command. As a result of this, there is a problem in that a long time is needed for the Bluetooth module to reconnect the disconnected radio transmission line in accordance with the line connection command sent from the host computer.

### SUMMARY OF THE INVENTION

The present invention is designed with respect to the points described above, and the object of the present invention is to provide a line connection restoration method and a line connection restoration program capable of quickly restoring connection of a radio transmission line that has been disconnected, irrespective of a state of a host computer in an information communication apparatus, in a short time.

In order to achieve the above-mentioned object, according to an aspect of the present invention, in a line connection restoration method, a control unit of a communication module in one information communication apparatus that includes a host computer and the communication module and that performs radio communication by transferring a radio transmission signal detects disconnection of a radio transmission line for the radio transmission signal, analyzes the reason for the disconnection of the radio transmission line, determines whether or not to reconnect the disconnected radio transmission line on the basis of the analysis of the disconnection reason, generates a reconnection command signal if the disconnected radio transmission line should be reconnected, and generates a forced line disconnection command signal if the disconnected radio transmission line does not have to be reconnected.

According to the line connection restoration method, when the radio transmission line between the one information communication apparatus and the other information communication apparatus is disconnected, the disconnection of the radio transmission line is not reported to the host computer, and processing for reconnection of the radio transmission line can be performed only by the communication module. Also, even if the host computer is performing other processing when the radio transmission line is disconnected, the disconnected radio transmission line can be immediately reconnected only by the communication module without waiting for the reconnection command signal sent from the host computer. Thus, the disconnected radio transmission line can be quickly reconnected.

Preferably, after determining that the disconnected radio transmission line should be reconnected, the control unit may determine whether or not the radio transmission line is connected from the one information communication apparatus on the basis of the analyzed disconnection reason, generate the reconnection command signal if the radio transmission line is connected from the one information communication apparatus, and wait for the reconnection command signal sent from the other information communication apparatus if the radio transmission line is not connected from the one information communication apparatus.

According to the line connection restoration method, when the radio transmission line is disconnected, the disconnection of the radio transmission line is not reported to the host computer. When the radio transmission line is connected from the one information communication apparatus, processing for reconnection of the radio transmission line can be immediately and quickly performed only by the communication module without waiting for the reconnection command signal sent from the host computer.

Preferably, the communication module may be a Bluetooth module. Also, the control unit may detect that the reason for the disconnection of the radio transmission line arises from a plurality of upper protocol layers or a lower protocol layer provided in the Bluetooth module.

According to the line connection restoration method, even if the reason for the disconnection of the radio transmission line arises from the upper protocol layers or the lower protocol layer, analysis of the disconnection reason and determination of whether or not to reconnect the disconnected radio transmission line is performed only by the Bluetooth module. If the disconnected radio transmission line should be reconnected, processing for reconnection can be immediately and quickly performed by the Bluetooth module without waiting for the reconnection command signal sent from the host computer.

According to another aspect of the present invention, a line connection restoration program causes a control unit of a communication module in one information communication apparatus that includes a host computer and the communication module and that performs radio communication by transferring a radio transmission signal to function as a detecting unit for detecting disconnection of a radio transmission line for the radio transmission signal, an analyzing unit for analyzing the reason for the disconnection of the radio transmission line, a reconnection determining unit for determining whether or not to reconnect the disconnected radio transmission line on the basis of the analysis of the disconnection reason, a reconnection command signal generating unit for generating a reconnection command signal if the disconnected radio transmission line should be reconnected, and a forced line disconnection command signal generating unit for generating a forced line disconnection command signal if the disconnected radio transmission line does not have to be reconnected.

According to the line connection restoration program, when the radio transmission line between the one information communication apparatus and the other information communication apparatus is disconnected, the disconnection of the radio transmission line is not reported to the host computer, and processing for reconnection of the radio transmission line can be performed only by the communication module. Also, even if the host computer is performing other processing when the radio transmission line is disconnected, the disconnected radio transmission line can be immediately reconnected only by the communication module without waiting for the reconnection command signal sent from the host computer. Thus, the disconnected radio transmission line can be quickly reconnected.

The line connection restoration program may cause the control unit to function as a connecting apparatus determining unit for determining whether or not the radio transmission line is connected from the one information communication apparatus on the basis of the analyzed disconnection reason after determining that the disconnected radio transmission line should be reconnected, the reconnection command signal generating unit for generating the reconnection command signal if the radio transmission line is connected from the one information communication apparatus, and a waiting unit for waiting for the reconnection command signal sent from the other information communication apparatus if the radio transmission line is not connected from the one information communication apparatus.

According to the line connection restoration program, when the radio transmission line is disconnected, the disconnection of the radio transmission line is not reported to the host computer. When the radio transmission line is connected from the one information communication apparatus, processing for reconnection of the radio transmission line can be immediately and quickly performed only by the communication module without waiting for the reconnection command signal sent from the host computer.

In the line connection restoration program, the communication module may be a Bluetooth module. The program may cause the control unit to function as a disconnection reason detecting unit for detecting that the reason for the disconnection of the radio transmission line arises from a plurality of upper protocol layers or a lower protocol layer provided in the Bluetooth module.

According to the line connection restoration program, even if the reason for the disconnection of the radio transmission line arises from the upper protocol layers or the lower protocol layer, analysis of the disconnection reason and determination of whether or not to reconnect the disconnected radio transmission line is performed only by the Bluetooth module. If the disconnected radio transmission line should be reconnected, processing for reconnection can be immediately and quickly performed by the Bluetooth module without waiting for the reconnection command signal sent from the host computer.

Embodiments of the invention will now be described, by way of example only, with reference to the accompanying drawings, in which:
Fig. 1 is a block diagram of the structure of an information communication apparatus for executing a line connection restoration method according to the present invention;
Fig. 2 is a block diagram of the structure of a line connection restoration circuit of a communication module constituting the information communication apparatus shown in Fig. 1;
Fig. 3 is a block diagram of the relationship between means for a line connection restoration program according to a first embodiment of the present invention and protocol layers and an interface that are provided in a Bluetooth module functioning as a communication module;
Fig. 4 is a flowchart showing the sequence of processing of the line connection restoration method according to the present invention; and
Fig. 5 is a block diagram of the relationship between means for a line connection restoration program according to a second embodiment of the present invention and a protocol layer and an interface that are provided in a Bluetooth module functioning as a communication module.

### DESCRIPTION OF THE PREFERRED EMBODIMENTS

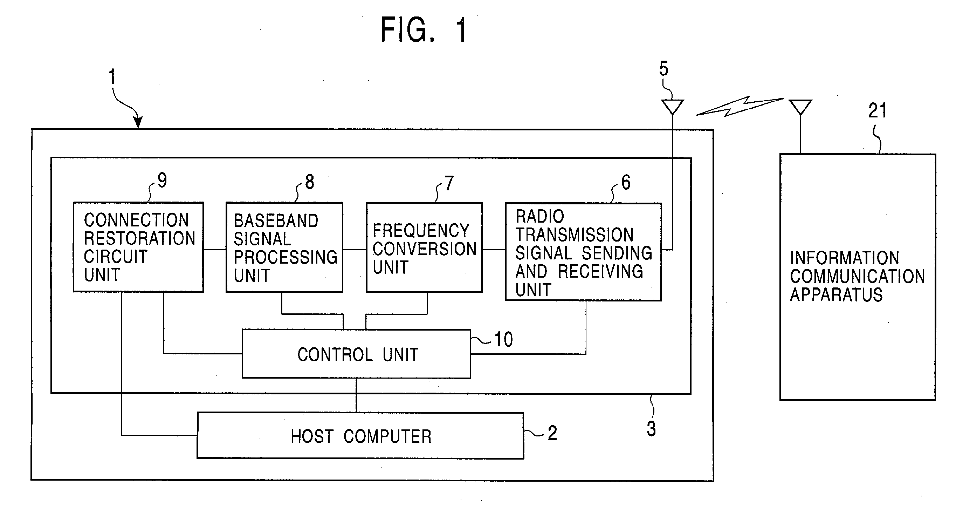

A line connection restoration method and a line connection restoration program according to the present invention will now be described with reference to Figs. 1 to 5.

Fig. 1 shows an information communication apparatus 1 for executing a line connection restoration method and a line connection restoration program according to a first embodiment of the present invention. Referring to Fig. 1, the information communication apparatus 1 comprises a host computer 2 and a Bluetooth module 3 functioning as a communication module.

The Bluetooth module 3 comprises a radio transmission signal sending and receiving unit 6 connected to a sending and receiving antenna 5, a frequency conversion unit 7 connected to the radio transmission signal sending and receiving unit 6, a baseband signal processing unit 8 connected to the frequency conversion unit 7, and a connection restoration circuit unit 9 connected to the baseband signal processing unit 8. The connection restoration circuit unit 9 is also connected to the host computer 2. Also, the Bluetooth module 3 comprises a control unit 10 for controlling each of the units, such as the connection restoration circuit unit 9, of the Bluetooth module 3.

Also, the Bluetooth module 3 is provided with a lower protocol layer, such as a link manager protocol (LMP), a plurality of upper protocol layers (1, 2, ···, n), such as an object exchange protocol (OBEX) and a serial port profile in addition to a logical link control and adaptation protocol (L2CAP) and a service discovery protocol (SDP), and an interface between the host and the module for transferring an event and a command between an application program of the host computer 2 and the highest protocol layer of the upper protocol layers.

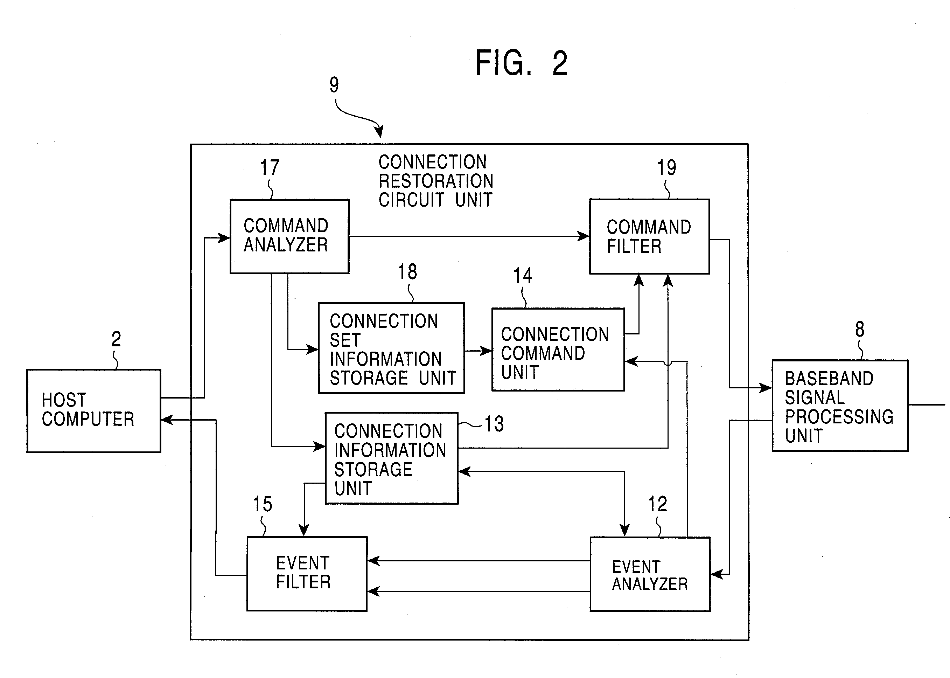

Referring to Fig. 2, the connection restoration circuit unit 9 comprises an event analyzer 12 connected to the baseband signal processing unit 8, a connection information storage unit 13 and a connection command unit 14 connected to the event analyzer 12, and an event filter 15 connected to the host computer 2 and the connection information storage unit 13. The connection restoration circuit unit 9 also comprises a command analyzer 17 connected to the host computer 2 and the connection information storage unit 13, a connection set information storage unit 18 connected to the command analyzer 17 and the connection command unit 14, and a command filter 19 connected to the baseband signal processing unit 8, the connection information storage unit 13, the connection command unit 14, and the command analyzer 17.

In the information communication apparatus 1, in order to send a radio transmission signal to an information communication apparatus 21, the control unit 10 of the Bluetooth module 3 causes the baseband signal processing unit 8 to convert a baseband signal, which is sent from the host computer 2 and received by the connection restoration circuit unit 9, into coded data and to send the coded data to the frequency conversion unit 7. Then, the control unit 10 causes the frequency conversion unit 7 to frequency-convert the coded data into a radio transmission signal and to send the radio transmission signal to the radio transmission signal sending and receiving unit 6. Then, the control unit 10 causes the radio transmission signal sending and receiving unit 6 to convert the radio transmission signal into a predetermined transmission level and to send the converted radio transmission signal to the information communication apparatus 21 via the sending and receiving antenna 5.

Also, in the information communication apparatus 1, in order to receive a radio transmission signal from the information communication apparatus 21, the control unit 10 causes the radio transmission signal sending and receiving unit 6 to convert a radio transmission signal, which is sent from the information communication apparatus 21 and received by the sending and receiving antenna 5, into a predetermined reception level and to send the converted radio transmission signal to the frequency conversion unit 7. Then, the control unit 10 causes the frequency conversion unit 7 to frequency-convert the radio transmission signal into coded data and to send the coded data to the baseband signal processing unit 8. Then, the control unit 10 causes the baseband signal processing unit 8 to convert the coded data into a baseband signal and to send the baseband signal to the host computer 2 via the connection restoration circuit unit 9.

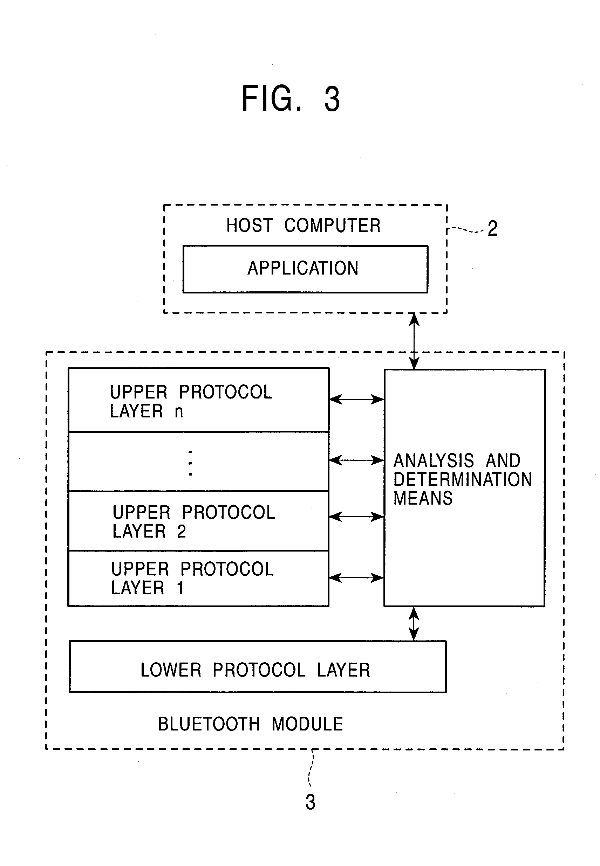

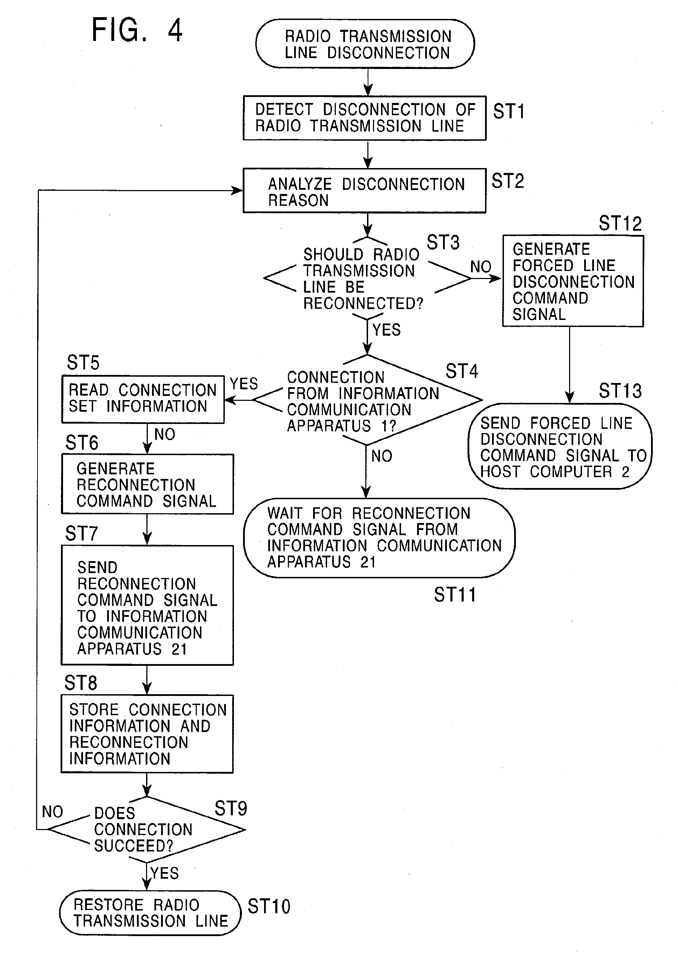

The line connection restoration method according to the first embodiment will now be described with reference to Figs. 3 and 4.

Fig. 3 is a block diagram of the relationship between means for the line connection restoration program according to the first embodiment and the protocol layers and the interface that are provided in the Bluetooth module 3 functioning as a communication module. As shown in Fig. 3, the line connection restoration program causes the control unit 10 of the Bluetooth module 3 to function as analysis and determination means for analyzing the reason for disconnection of the radio transmission line and determining whether or not to reconnect the disconnected radio transmission line. The control unit 10, which functions as the analysis and determination means, is connected to the lower protocol layer, the upper protocol layers, and the interface between the host and the module.

Referring to Fig. 4, when the radio transmission line between the information communication apparatus 1 and the information communication apparatus 21 is disconnected in a state of transmission failure in a radio transmission signal or a normal state and when the reason for the disconnection of the radio transmission line arises from the lower protocol layer or the upper protocol layers, the control unit 10 of the Bluetooth module 3 detects the disconnection state of the radio transmission line (step ST1). Then, the control unit 10 causes the baseband signal processing unit 8 to generate a line disconnection signal and to send the line disconnection signal to the connection restoration circuit unit 9.

Then, the control unit 10 causes the event analyzer 12 of the connection restoration circuit unit 9 to check connection information, which represents a request for connection of the radio transmission line, stored in the connection information storage unit 13 of the connection restoration circuit unit 9 and to analyze the reason for the disconnection of the radio transmission line on the basis of the line disconnection signal (step ST2), and the control unit 10 causes the event analyzer 12 of the connection restoration circuit unit 9 to determine whether or not to reconnect the disconnected radio transmission line (step ST3).

If it is determined that the disconnected radio transmission line should be reconnected (if the determination in step ST3 is YES), it is determined whether or not the radio transmission line is connected from the information communication apparatus 1 on the basis of the analyzed disconnection reason (step ST4). If the radio transmission line is connected from the information communication apparatus 1 (if the determination in step ST4 is YES), the control unit 10 causes the event analyzer 12 to send a drive control signal to the connection command unit 14 and causes the connection command unit 14 to read connection set information, which represents setting of connection of the radio transmission line, stored in the connection set information storage unit 18 (step ST5) and to generate a reconnection command signal (step ST6). Also, the control unit 10 sets the event filter 15 of the connection restoration circuit unit 9 to a transmission prevention state, thus preventing transmission of the line disconnection signal to the host computer 2.

The control unit 10 causes the command filter 19 to send the reconnection command signal to the baseband signal processing unit 8, and then the reconnection command signal is sent to the information communication apparatus 21 via the frequency conversion unit 7, the radio transmission signal sending and receiving unit 6, and the sending and receiving antenna 5 (step ST7). After'causing the baseband signal processing unit 8 to send an event to the connection restoration circuit unit 9, the control unit 10 causes the event analyzer 12 to extract the previous connection information and reconnection information, which represents reconnection, in accordance with the event and to store the connection information and the reconnection information into the connection information storage unit 13 (step ST8). Accordingly, the control unit 10 determines whether or not reconnection of the radio transmission line between the information communication apparatus 1 and the information communication apparatus 21 has succeeded (step ST9).

As a result of this, if the reconnection of the radio transmission line between the information communication apparatus 1 and the information communication apparatus 21 succeeds (if the determination in step ST9 is YES), connection of the radio transmission line is restored (step ST10). In contrast, if the reconnection of the radio transmission line does not succeed (if the determination in step ST9 is NO), the control unit 10 analyzes the reason for the disconnection of the radio transmission line again (step ST2).

Then, the host computer 2 generates a command in accordance with the previous connection information and receives an event based on the connection information from the control unit 10 via the connection restoration circuit unit 9. Thus, the control unit 10 causes the event filter 15 to replace the reconnection information included in the event with the previous connection information and to send the event to the host computer 2. The control unit 10 also causes the command filter 19 to replace the reconnection information included in the command with the previous connection information.

If it is determined that the disconnected radio transmission line should be reconnected (if the determination in step ST3 is YES) and if it is determined that the radio transmission line is connected from the information communication apparatus 21 on the basis of the analyzed disconnection reason (if the determination in step ST4 is NO), the control unit 10 waits for the reconnection command signal sent from the information communication apparatus 21 (step ST11). Here, the control unit 10 sets the event filter 15 of the connection restoration circuit unit 9 to a transmission prevention state, thus preventing transmission of the line connection signal to the host computer 2.

If it is determined that the disconnected radio transmission line does not have to be reconnected (the determination in step ST3 is NO), the control unit 10 causes the baseband signal processing unit 8 to generate a forced line disconnection command signal (step ST12), and causes the connection restoration circuit unit 9 to send the forced line disconnection command signal to the host computer 2 via the interface between the host and the module (step ST13). Here, the control unit 10 clears the connection information stored in the connection information storage unit 13 by a clear signal generated by the event analyzer 12 in response to the forced line disconnection command. The state in which the disconnected radio transmission line does not have to be reconnected is, for example, a case where the radio transmission line is disconnected in the normal state.

According to the first embodiment, when a radio transmission line between the information communication apparatus 1 and the information communication apparatus 21 is disconnected, the control unit 10 of the Bluetooth module 3 generates a line disconnection signal, analyzes the reason for the disconnection of the radio transmission line, and determines whether or not to reconnect the disconnected radio transmission line. If the disconnected radio transmission line should be reconnected, the control unit 10 generates a reconnection command signal and sends the reconnection command signal to the information communication apparatus 21, so that the disconnected radio transmission line is reconnected. Here, the line disconnection signal is not sent to the host computer 2. Thus, if the radio transmission line is disconnected due to a transmission failure, processing for reconnection of the radio transmission line can be performed only by the Bluetooth module 3, not by the information communication apparatus 1.

Consequently, even if the host computer 2 is performing other processing when a radio transmission line is disconnected, the disconnected radio transmission line can be immediately reconnected only by the Bluetooth module 3 without waiting for a reconnection command signal sent from the host computer 2. Thus, the disconnected radio transmission line can be rapidly reconnected.

Also, since the Bluetooth module 3 is provided with upper protocol layers as well as a lower protocol layer, even if the reason for disconnection of a radio transmission line arises from the lower protocol layer or the upper protocol layers, the control unit 10 analyzes the disconnection reason and determines whether or not to reconnect the disconnected radio transmission line. If the disconnected radio transmission line should be reconnected, the control unit 10 performs processing for reconnection. Thus, even if the reason for disconnection of a radio transmission line arises from the upper protocol layers, the disconnected radio transmission line can be immediately reconnected only by the Bluetooth module 3 without waiting for a reconnection command signal sent from the host computer 2.

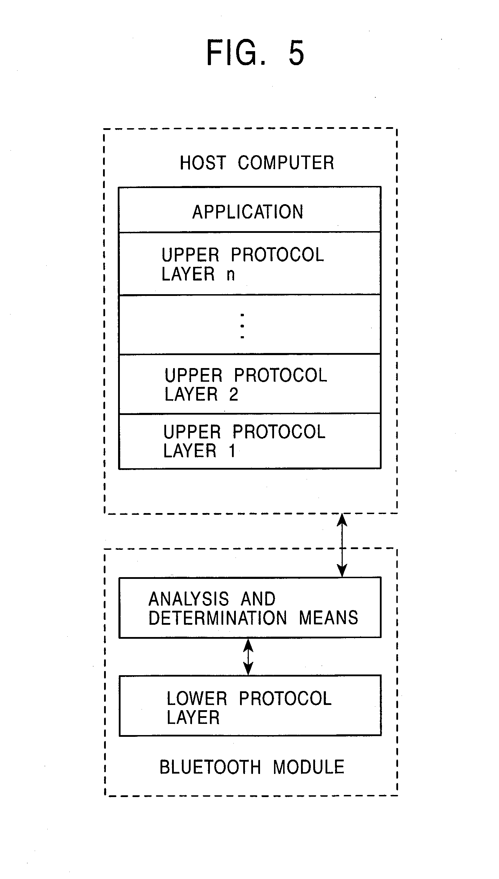

A line connection restoration method and a line connection restoration program according to a second embodiment of the present invention will now be described with reference to Fig. 5.

Fig. 5 is a block diagram of the relationship between means for the line connection restoration program according to the second embodiment and a protocol layer and an interface that are provided in a Bluetooth module functioning as a communication module.

As shown in Fig. 5, the Bluetooth module is provided with a lower protocol layer of Bluetooth and a host controller interface (HCI), and a host computer is provided with a plurality of upper protocol layers (1, 2, ···, n) of Bluetooth.

The line connection restoration program causes a control unit of the Bluetooth module to function as analysis and determination means for analyzing the reason for disconnection of a radio transmission line and determining whether or not to reconnect the disconnected radio transmission line. The control unit, which functions as the analysis and determination means, is connected to the lower protocol layer and the HCI.

The operation of the second embodiment will now be described.

When a radio transmission line between one information communication apparatus and the other information communication apparatus is disconnected in a state of transmission failure in a radio transmission signal or a normal state and when the reason for the disconnection of the radio transmission line arises from the lower protocol layer, the control unit of the Bluetooth module detects the disconnection state of the radio transmission line. Then, the control unit causes a baseband signal processing unit to generate a line disconnection signal and to send the line disconnection signal to a connection restoration circuit unit.

Then, the control unit analyzes the reason for the disconnection of the radio transmission line on the basis of the line disconnection signal and determines whether or not to reconnect the disconnected radio transmission line. If it is determined that the disconnected radio transmission line should be reconnected and if the radio transmission line is connected from the one information communication apparatus, the control unit performs reconnection of the radio transmission line between the one information communication apparatus and the other information communication apparatus while causing the connection restoration circuit unit to prevent transmission of the line disconnection signal to the host computer.

If it is determined that the disconnected radio transmission line should be reconnected and if the radio transmission line is connected from a Bluetooth module of the other information communication apparatus, the control unit waits for a reconnection command signal sent from the other information communication apparatus while causing the connection restoration circuit unit to prevent transmission of the line disconnection signal to the host computer.

If it is determined that the disconnected radio transmission line does not have to be reconnected, the control unit generates a forced line disconnection command signal and sends the forced line disconnection signal to the host computer.

Since the other structure and operation of the second embodiment are similar to those in the first embodiment, the description for them is omitted here.

According to the second embodiment, when a radio transmission line between one information communication apparatus and the other information communication apparatus is disconnected and when the reason for the disconnection of the radio transmission line arises from the lower protocol layer, processing for reconnection of the radio transmission line can be performed only by the Bluetooth module, not by the host computer.

Thus, even if the host computer is performing other processing when the radio transmission line is disconnected, reconnection of the radio transmission line can be immediately and quickly performed only by the Bluetooth module without waiting for a reconnection command signal sent from the host computer.

The present invention is not limited to the embodiments described above. Various changes and modifications may be made in the present invention without departing from the spirit and scope of the present invention.

Although, for example, the communication module is explained by way of example of a Bluetooth module, the communication module is not limited to this. Other types of radio communication modules may be used.

## Claims

1. A line connection restoration method, wherein a control unit of a communication module in one information communication apparatus that includes a host computer and the communication module and that performs radio communication by transferring a radio transmission signal detects disconnection of a radio transmission line for the radio transmission signal, analyzes the reason for the disconnection of the radio transmission line, determines whether or not to reconnect the disconnected radio transmission line on the basis of the analysis of the disconnection reason, generates a reconnection command signal if the disconnected radio transmission line should be reconnected, and generates a forced line disconnection command signal if the disconnected radio transmission line does not have to be reconnected.

2. A line connection restoration method according to Claim 1, wherein, after determining that the disconnected radio transmission line should be reconnected, the control unit determines whether or not the radio transmission line is connected from the one information communication apparatus on the basis of the analyzed disconnection reason, generates the reconnection command signal if the radio transmission line is connected from the one information communication apparatus, and waits for the reconnection command signal sent from the other information communication apparatus if the radio transmission line is not connected from the one information communication apparatus.

3. A line connection restoration method according to Claim 1, wherein the communication module is a Bluetooth module, and wherein the control unit detects that the reason for the disconnection of the radio transmission line arises from a plurality of upper protocol layers or a lower protocol layer provided in the Bluetooth module.

4. A line connection restoration program for causing a control unit of a communication module in one information communication apparatus that includes a host computer and the communication module and that performs radio communication by transferring a radio transmission signal to function as detecting means for detecting disconnection of a radio transmission line for the radio transmission signal, analyzing means for analyzing the reason for the disconnection of the radio transmission line, reconnection determining means for determining whether or not to reconnect the disconnected radio transmission line on the basis of the analysis of the disconnection reason, reconnection command signal generating means for generating a reconnection command signal if the disconnected radio transmission line should be reconnected, and forced line disconnection command signal generating means for generating a forced line disconnection command signal if the disconnected radio transmission line does not have to be reconnected.

5. A line connection restoration program according to Claim 4, for causing the control unit to function as connecting apparatus determining means for determining whether or not the radio transmission line is connected from the one information communication apparatus on the basis of the analyzed disconnection reason after determining that the disconnected radio transmission line should be reconnected, the reconnection command signal generating means for generating the reconnection command signal if the radio transmission line is connected from the one information communication apparatus, and waiting means for waiting for the reconnection command signal sent from the other information communication apparatus if the radio transmission line is not connected from the one information communication apparatus.

6. A line connection restoration program according to Claim 4, wherein the communication module is a Bluetooth module, and wherein the program causes the control unit to function as disconnection reason detecting means for detecting that the reason for the disconnection of the radio transmission line arises from a plurality of upper protocol layers or a lower protocol layer provided in the Bluetooth module.
